# EUROPÄISCHE PATENTSCHRIFT

(11) **EP 2 982 915 B1**
(45) Veröffentlichungstag und Bekanntmachung des Hinweises auf die Patenterteilung: **21.02.2018**
(21) Anmeldenummer: 15170216.4
(22) Anmeldetag: 02.06.2015
(51) Int. Cl.: F24J 2/04, E04D 13/03, H02S 20/23, F24J 2/52, F24J 2/26

(54) **BEDACHUNGSSYSTEM UND VERFAHREN ZUR MONTAGE SOLCH EINES BEDACHUNGSSYSTEMS**
ROOFING SYSTEM, AND METHOD FOR MOUNTING SUCH A ROOFING SYSTEM
SYSTÈME DE TOITURE ET PROCÉDÉ DE MONTAGE D'UN TEL SYSTÈME DE TOITURE

(30) Priorität: 04.08.2014 DE 102014215267
(43) Veröffentlichungstag der Anmeldung: 10.02.2016
(73) Patentinhaber: ROBERT BOSCH GMBH, 70442 Stuttgart (DE)
(72) Erfinder: Schneider, Tobias, 35110 Frankenau (DE)

(56) Entgegenhaltungen:
- EP-A1- 2 472 025
- EP-A2- 0 048 694
- CN-Y- 2 876 224
- DE-U1- 29 803 402

## Beschreibung

Die Erfindung betrifft ein Bedachungssystem gemäß Patentanspruch 1 und ein Verfahren zur Montage solch eines Bedachungssystems gemäß Patentanspruch 8.

### Stand der Technik

Es sind Bedachungssysteme mit einer Bedachung und einem thermischen Solarkollektor bekannt, wobei der thermische Solarkollektor derart in die Bedachung eingebaut wird, dass innenseitig des thermischen Solarkollektors keine Bedachung vorgesehen ist.

Aus der EP 0 048 694 ist ein gattungsgemässes Bedachungssystem und insbesondere ein Gefäss-System für einen Wärmeträger, insbesondere einen Umwelt-Wärmetauscher, mit flachen oder gerillten Wärmetauscher-Elementen, bekannt, wobei die Wärmetauscher-Elemente in beliebiger Richtung verschiebbar auf Trägerprofilen angeordnet sind.

Aus der EP 2 472 025 A1 ist ein Befestigungselement für ein Dachfester bekannt.

Ferner ist aus der DE 298 03 402 U1 ein Sonnenkollektor mit einem Gehäuse zur Aufnahme einer Wärmeabsorptionseinrichtung bekannt, wobei die Wärmeabsorptionseinrichtung mit zumindest einer teilweisen transparenten Abdeckplatte abgeschlossen ist und auf einem Dach befestigt ist.

### Offenbarung der Erfindung

Es ist Aufgabe der Erfindung, ein verbessertes Bedachsystem und ein verbessertes Verfahren zur Montage des Bedachungssystems bereitzustellen.

Diese Aufgabe wird mittels eines Bedachungssystems gemäß Patentanspruch 1 gelöst. Vorteilhafte Ausführungsformen sind in den abhängigen Ansprüchen angegeben.

Erfindungsgemäß wurde erkannt, dass eine verbesserte Dacheinheit dadurch bereitgestellt werden kann, dass die Dacheinheit ein Dachelement und eine Dichteinrichtung umfasst. Die Dichteinrichtung ist angrenzend an das Dachelement angeordnet. Die Dichteinrichtung umfasst einen flexiblen Schlauch und eine Befülleinrichtung. Die Befülleinrichtung ist ausgebildet, ein Medium in den Schlauch zur Veränderung eines Querschnitts des Schlauchs zu fördern. Dadurch wird ein Spalt zwischen dem Dachelement und der Bedachung reduziert. Dadurch wird vermieden, dass Feuchtigkeit zwischen der Dacheinheit und der Bedachung vor der Außenfläche hin zur Innenseite in das Gebäude eintreten kann. Dadurch werden die Isolationseigenschaften des Gebäudes erhöht. Ferner wird eine schnelle Montage der Dacheinheit durch die Dichteinheit gewährleistet. Nach der Erfindung umfasst das Dachelement ein Gehäuse und eine seitlich am Gehäuse angeordnete Abdeckung. Zumindest teilweise unterhalb der Abdeckung ist die Dichteinrichtung angeordnet.

In einer weiteren Ausführungsform umfasst die Abdeckung einen ersten Abschnitt und einen mit dem ersten Abschnitt verbundenen zweiten Abschnitt. Der erste Abschnitt ist im Wesentlichen parallel zu einer Oberseite und/oder Unterseite des Gehäuses ausgerichtet. Der zweite Abschnitt ist im Wesentlichen senkrecht zum ersten Abschnitt angeordnet, wobei der erste Abschnitt mit dem Gehäuse verbunden ist. Durch die daraus sich ergebende L-förmige Ausgestaltung wird ein UV-Schutz für die Dichteinrichtung gewährleistet. Auf diese Weise wird gewährleistet, dass die Dichteinrichtung weder porös wird noch im Lauf der Zeit undicht wird.

In einer weiteren Ausführungsform umfasst das Gehäuse eine Seitenwand. Die Abdeckung weist eine zumindest teilweise zugewandte Innenwand auf. Der Schlauch ist zumindest abschnittsweise zwischen der Seitenwand und der Innenwand angeordnet. Auf diese Weise wird eine gute Abdichtung erreicht. Nach der Erfindung umfasst die Dichteinrichtung eine Dichtschicht. Die Dichtschicht ist an der Bedachung anordenbar. Der Schlauch ist zwischen der Dichtschicht und der Abdeckung angeordnet. Dadurch wird die Abdichtung der Dichteinrichtung weiter verbessert.

In einer weiteren Ausführungsform ist die Dichtschicht wandartig ausgebildet und/oder umfasst einen Schaumwerkstoff. Auf diese Weise kann eine schnelle Montage der Dichtschicht erreicht werden.

In einer weiteren Ausführungsform umfasst die Befülleinrichtung ein Ventil. Das Ventil ist mit einem Innenraum des Schlauchs fluidisch verbunden. Mittels des Ventils kann das Medium in den Innenraum gefördert werden. Dadurch kann der Schlauch schnell befüllt werden.

In einer weiteren Ausführungsform ist das Dachelement als thermischer Solarkollektor oder als Photovoltaikmodul oder als Fenster ausgebildet.

Das Bedachungssystem umfasst eine Bedachung und eine Dacheinheit, die wie oben beschrieben ausgebildet ist. Die Dichteinrichtung überlappt zumindest abschnittsweise mit der Bedachung. Der Schlauch ist ausgebildet, einen Spalt zwischen dem Dachelement und der Bedachung zu reduzieren. Dadurch wird ein Feuchtigkeitseintritt auch bei einer komplexen geometrischen Ausgestaltung der Bedachung vermieden.

In einer weiteren Ausführungsform umfasst die Bedachung eine Einbuchtung, wobei der Schlauch in die Einbuchtung zumindest teilweise eingreift, wobei das Medium den Schlauch zwischen der Einbuchtung und dem ersten/oder zweiten Abschnitt verspannt. Auf diese Weise wird eine zuverlässige Abdichtung des Bedachungssystems zwischen Innenseite und Außenfläche erreicht.

Die Aufgabe wird aber auch durch ein Verfahren zur Montage des Bedachungssystems gemäß Patentanspruch 8 gelöst. Vorteilhafte Ausführungsformen sind in den abhängigen Ansprüchen angegeben.

Erfindungsgemäß wurde erkannt, dass ein verbessertes Verfahren zur Montage des oben beschriebenen Bedachungssystems dadurch bereitgestellt werden kann, dass das Dachelement derart an der Bedachung befestigt wird, dass die Dichteinrichtung zumindest abschnittsweise mit der Bedachung überlappt, wobei das Medium in den Schlauch gefördert wird, sodass der Schlauch den Spalt zwischen der Bedachung und dem Dachelement reduziert, vorzugsweise schließt.

Diese Ausgestaltung ermöglicht eine schnelle Montage des Bedachungssystems, sodass die Baukosten für das Bedachungssystem besonders gering sind.

In einer weiteren Ausführungsform wird auf die Bedachung, vorzugsweise vor der Förderung des Mediums in den Schlauch, die Dichtschicht aufgebracht, wobei das Medium den Schlauch zumindest abschnittsweise in die Dichtschicht presst, wobei der Schlauch eine stoffschlüssige Verbindung mit der Dichtschicht eingeht. Dadurch wird gewährleistet, dass bei einem Druckverlust aus dem Innenraum des Schlauchs eine zuverlässige Abdichtung zwischen Innenseite und der Außenfläche des Gebäudes gewährleistet wird.

Nachfolgend wird die Erfindung anhand von Figuren näher erläutert. Dabei zeigen:
Figur 1 eine Schnittansicht durch ein Bedachungssystem, das keine Dichtschicht aufweist und somit nicht Teil der Erfindung ist, nach einem ersten Montageschritt;
Figur 2 eine Draufsicht auf das in Figur 1 gezeigte Bedachungssystem;
Figur 3 eine Schnittansicht durch das in den Figuren 1 und 2 gezeigte Bedachungssystem nach einem zweiten Montageschritt;
Figur 4 eine Schnittansicht durch ein Bedachungssystem gemäß einer ersten Ausführungsform nach einem zweiten Montageschritt;
Figur 5 eine Schnittansicht durch das in Figur 4 gezeigte Bedachungssystem nach einem dritten Montageschritt;
Figur 6 eine Schnittansicht durch ein Bedachungssystem gemäß einer zweiten Ausführungsform nach einem zweiten Montageschritt; und
Figur 7 eine Schnittansicht durch das in Figur 6 gezeigte Bedachungssystem nach einem dritten Montageschritt.

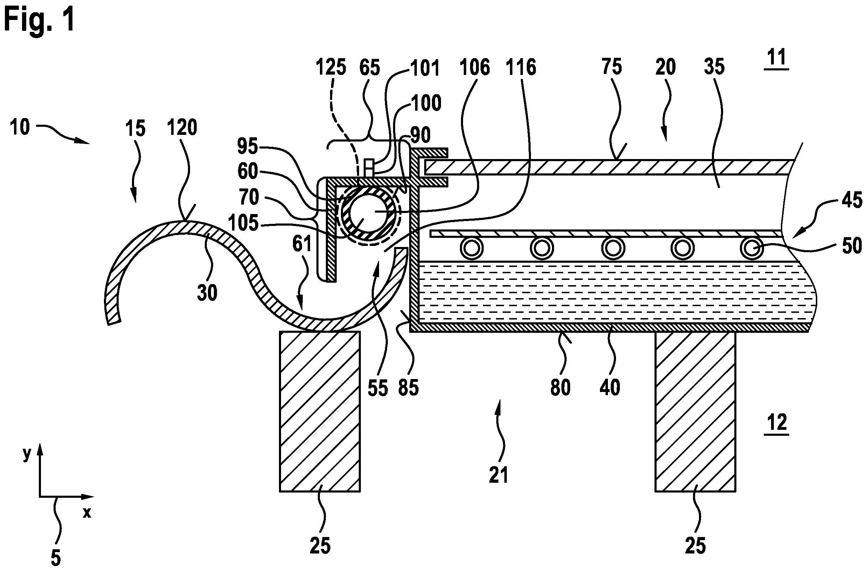

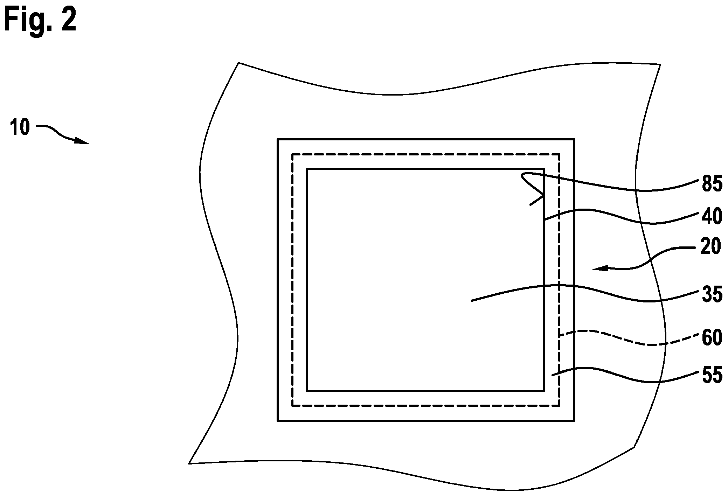

Figur 1 zeigt eine Schnittansicht durch ein Bedachungssystem 10 ohne Dichtschicht nach einem ersten Montageschritt. Figur 2 zeigt eine Draufsicht auf das in Figur 1 gezeigte Bedachungssystem 10.

Zur erleichternden Beschreibung im Folgenden wird auf ein Koordinatensystem 5 verwiesen. Das Koordinatensystem 5 ist als Rechtssystem ausgebildet und umfasst hierbei eine x-Achse und eine y-Achse. Die Achsen sind rechtwinklig zueinander angeordnet. Dabei wird bei einer Bezugnahme in x-Richtung von einer Ausrichtung in einer Seitenrichtung und bei Bezugnahme in y-Richtung von einer Höhe.

In den folgenden Figuren ist oberseitig eine Außenseite 11, die Umwelteinflüssen wie Witterung, insbesondere Regen, Sonneneinstrahlung und Schnee, ausgesetzt ist und unterseitig eine Innenseite 12 des Bedachungssystems 10 angeordnet. Das Bedachungssystem 10 ist ausgebildet, die Umwelteinflüsse von der Innenseite 12 zumindest teilweise abzuhalten.

Das Bedachungssystem 10 umfasst eine Bedachung 15 und eine Dacheinheit 20. Die Bedachung 15 weist eine Aussparung 21, eine Trägerstruktur 25 und vorzugsweise mehrere schindelartig ausgebildete Bedachungselemente 30 auf. Das Bedachungselement 30 weist eine zur Außenseite 11 gewandte Außenfläche 120 auf. Die Trägerstruktur 25 des Bedachungssystems 10 dient dazu, Gewichtskräfte der Bedachungselemente 30 und der Dacheinheit 20 sowie gegebenenfalls Zusatzkräfte, wie zum Beispiel Schneelasten, abzuführen. Um das Bedachungssystem 10 zu montieren, wird in einem ersten Montageschritt nach dem Verlegen der Bedachungselemente 30 die Dacheinheit 20 auf der Trägerstruktur 25 befestigt.

Die Dacheinheit 20 weist ein Dachelement 35 auf. Das Dachelement 35 ist in der Ausführungsform als thermischer Solarkollektor ausgebildet. Alternativ ist auch denkbar, dass das Dachelement ein Dachfenster oder ein Photovoltaikmodul ist. Das Dachelement 35 umfasst ein Gehäuse 40, in dem Komponenten eines Wärmeübertragers 45 vorgesehen sind, um mithilfe des Wärmeübertragers 45 Wärmeenergie aus einer Sonnenstrahlung in ein Wärmeträgermedium 50 zu übertragen. Der Wärmeübertrager 45 ist dabei fluidisch mit einem Heizsystem (nicht dargestellt) verbindbar. Das Gehäuse 40 ist teilweise in der Aussparung 21 angeordnet, und an einer der Innenseite 12 zugewandten Seite des Gehäuses mit der Trägerstruktur 25 verbunden.

Ferner umfasst die Dacheinheit 20 eine Dichteinrichtung 55, die seitlich angrenzend an das Dachelement 35 angeordnet ist. Die Dichteinrichtung 55 ist bezogen auf das Bedachungselement 30 in x-Richtung überlappend angeordnet. Oberhalb auf einer zur Außenseite 11 hin zugewandten Seite weist das Dachelement 35 eine seitlich am Gehäuse 40 angeordnete Abdeckung 60 auf. Die Dichteinrichtung 55 ist dabei unterhalb auf einer zur Innenseite 12 hin zugewandten Seite der Abdeckung 60 angeordnet.

Das Bedachungselement 30 weist eine Einbuchtung 61 auf, die zumindest teilweise unterhalb der Abdeckung 60 angeordnet ist. Auf die Einbuchtung 61 kann in einer alternativen Ausführungsform des Bedachungselements verzichtet werden. Die Einbuchtung 61 ist dabei bezogen auf die Abdeckung 60 konkav ausgebildet. Dabei überlappt die Abdeckung 60 abschnittsweise mit dem Bedachungselement 30, sodass ein direkter Wassereintritt von der Außenseite 11 hin zur Innenseite 12 bereits durch die Überlappung des Bedachungselements 30 mit der Abdeckung 60 vermieden werden kann.

Die Abdeckung 60 umfasst einen ersten Abschnitt 65 und einen zweiten Abschnitt 70. Der erste Abschnitt 65 ist mit dem Gehäuse 40 verbunden. Der erste Abschnitt 65 verläuft dabei parallel zur Außenseite 11 zugewandten Oberseite 75 der Dacheinheit 20. In der Ausführungsform ist die Oberseite 75 parallel zu einer Unterseite 80 des Gehäuses 40 der Dacheinheit 20 angeordnet, sodass der erste Abschnitt 65 auch parallel zur Unterseite 80 ist. Der zweite Abschnitt 70 ist mit einem festen Ende mit dem ersten Abschnitt 65 verbunden.

Ein freies Ende des zweiten Abschnitts 70 ist innenseitig zu dem ersten Abschnitt 65 angeordnet. Vorzugsweise weist der zweite Abschnitt 70 einen Winkel von 90° zum ersten Abschnitt 65 auf. Der zweite Abschnitt 70 ist in der Ausführungsform aufgrund der rechteckförmigen Ausgestaltung des Gehäuses 40 parallel zu einer Seitenfläche 85 des Gehäuses 40 angeordnet. Die Abdeckung 60 weist auf einer zur Innenseite 12 zugewandten Seite eine Innenwand 90 auf. Die Innenwand 90 ist im zweiten Abschnitt 65 auch der Seitenwand 85 zugewandt. Die Dichteinrichtung 55 ist in Seitenrichtung zwischen der Innenwand 90 und der Seitenwand des Gehäuses 40 angeordnet.

Die Dichteinrichtung 55 umfasst einen Schlauch 95 und eine Befülleinrichtung 100. Der Schlauch 95 weist einen Innenraum 106 und eine äußere Umfangsfläche 110 auf. Der Schlauch 95 ist aus einem elastischen Material gefertigt, sodass bei einem Überdruck im Innenraum 106 sich der Schlauch 95 in seinem Querschnitt vergrößert und eine Lage der äußeren Umfangsfläche 110 verändert.

Zwischen der äußeren Umfangsfläche 110 und der Außenfläche 120 ist ein Spalt 116. Über diesen Spalt 116 kann in unbefülltem Zustand des Schlauchs 95 ein Gasaustausch zwischen der Innenseite 12 und er Außenseite 11 erfolgen. Der Gasaustausch kann dabei zu einer Kondensation und einem Wärmeverlust von der beheizten Innenseite 12 hin zur Außenseite 11 führen, was wiederum die Isolationseigenschaften des Gebäudes verschlechtert.

Die Befülleinrichtung 100 weist in der Ausführungsform ein Ventil 101 auf. Das Ventil 101 ist dabei mit dem Innenraum 106 des Druckraums fluidisch verbunden. Das Ventil 101 kann dabei beispielsweise als Autoventil ausgebildet sein, um einen Standardanschluss für Kompressoren bereitzustellen. Selbstverständlich kann das Ventil 101 auch andersartig ausgebildet sein. Das Ventil 101 durchgreift dabei den ersten Abschnitt 65 der Abdeckung 60, sodass das Ventil 101 auch nach der Befestigung der Dacheinheit 20 an den Trägerstruktur 25 auf einfache Weise zugänglich ist. Dabei ragt das Ventil 101 außenseitig über die Abdeckung 60 heraus. Diese Ausgestaltung hat ferner den Vorteil, dass auch bei der Verwendung von flüssigen Medien 105 diese auf einfache Weise über die Befülleinrichtung 100 in den Innenraum 106 gefördert werden können.

Ferner ist denkbar, dass die Befülleinrichtung 100 andersartig ausgebildet ist und zusätzlich oder alternativ eine Pumpeinrichtung (nicht dargestellt) umfasst, mit der beispielsweise als Medium 105 Luft aus der Umgebung der Befülleinrichtung 100 in den Schlauch 95 gefördert wird, wobei der Druck im Schlauch 95 größer ist als in der Umgebung.

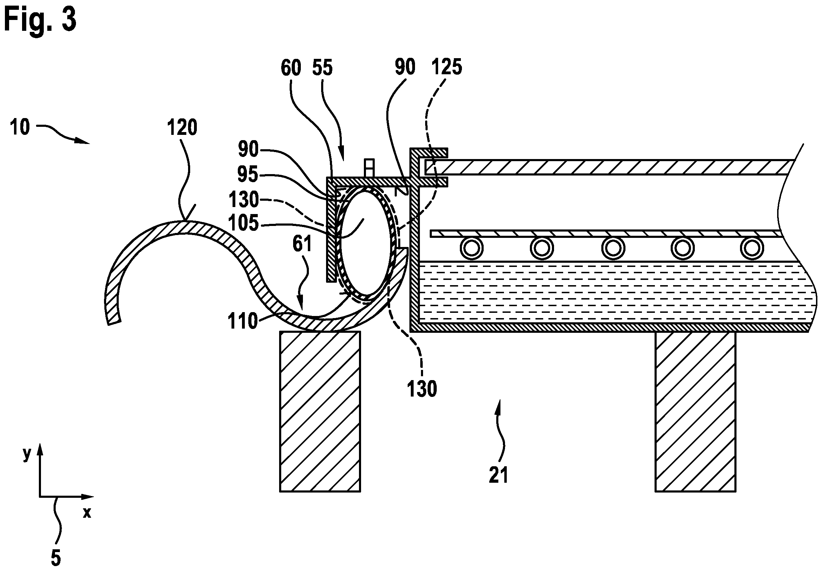

Figur 3 zeigt das in den Figuren 1 und 2 gezeigte Bedachungssystem 10 nach einem zweiten Montageschritt.

Im zweiten Montageschritt wird der Innenraum 106 des Schlauchs 95 durch die Befülleinrichtung 100 mit dem Medium 105 befüllt. Das Medium 105 weist einen Überdruck gegenüber der Umgebung auf. Das Medium 105 kann im Wesentlichen gasförmig ausgebildet sein. Selbstverständlich ist auch denkbar, dass das Medium 105 einen aushärtenden Schaumwerkstoff aufweist, der vorzugsweise porös und/oder elastisch ausgebildet ist. Alternativ ist auch denkbar, dass das Medium 105 ein Flüssigwerkstoff ist, der bei der Montage unter Druck stehend durch die Befülleinrichtung 100 in den Schlauch 95 gefördert wird.

Durch den Überdruck des Mediums 105 dehnt sich der Schlauch 95 derart aus, dass sich der Schlauch 95 zwischen der Einbuchtung 61 und dem ersten Abschnitt 65 und dem zweiten Abschnitt 70 verspannt und die äußere Umfangsfläche 110 des Schlauchs 95 an die Innenwand 90 der Abdeckung 60 und an die Außenfläche 120 des Bedachungselements 30 der Bedachung 15 durch das Medium 105 gepresst wird. Die äußere Umfangsfläche 110 passt sich dabei der geometrischen Ausgestaltung des Bedachungselements 30 selbstständig an. Dadurch wird der Spalt 116 zwischen der Außenfläche 120 des Bedachungselements 30 und der Dacheinheit 20 geschlossen und eine zuverlässige Abdichtung des Bedachungssystems 10 gewährleistet. Ferner kann ein Fluidaustausch über den Spalt 116 zwischen der Innenseite 12 und der Außenseite 11 vermieden werden, so dass das Bedachungssystem zum einen besonders einfach und schnell auch bei komplizierten Geometrien der Bedachung montierbar ist und eine gute Isolierwirkung aufweist.

Zusätzlich ist denkbar, dass an der äußeren Umfangsfläche 110 des Schlauchs eine Klebschicht 125 (strichliert in Figur 1 und 2 dargestellt) vorgesehen ist, die durch das Medium 105 an die Außenfläche 120 und an die Innenwand 90 gepresst wird und eine Klebeverbindung 130 mit der Außenfläche 120 der Bedachungselemente 30 und der Innenwand 90 eingeht. Dies hat den Vorteil, dass bei einem Nachlassen eines Drucks des Mediums 105 eine zuverlässige Abdichtung durch die Dichteinrichtung 55 bei der Indachmontage der Dacheinheit 20 gewährleistet wird. Selbstverständlich kann auf die Klebschicht 125 verzichtet werden.

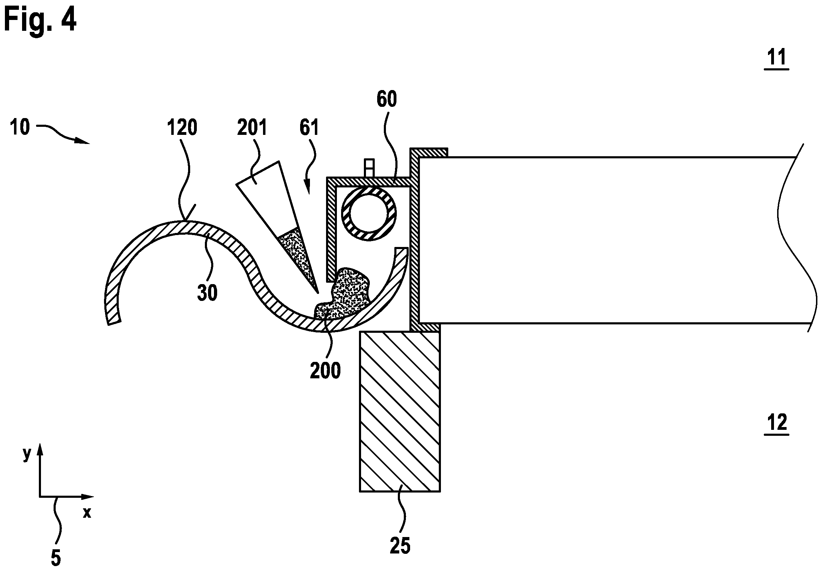

Figur 4 zeigt eine Schnittansicht durch ein Bedachungssystem 10 gemäß einer ersten Ausführungsform nach einem zweiten Montageschritt.

Das Bedachungssystem 10 ist im Wesentlichen identisch zu dem in den Figuren 1 und 2 gezeigten Bedachungssystem 10 ausgebildet. Abweichend dazu ist die Dacheinheit 20 als Dachfenster ausgebildet. Zusätzlich wird nach dem ersten Montageschritt, bei dem die Dacheinheit 20 an dem Trägerstruktur 25 innenseitig befestigt wird, in einem zweiten Montageschritt eine Dichtschicht 200 mittels eines Werkzeugs 201 zwischen der Abdeckung 60 und der Außenfläche 120 des Bedachungselements 30, vorzugsweise in einem Bereich der Einbuchtung 61 des Bedachungselements 30, eingebracht. Die Dichtschicht 200 kann beispielsweise ein Silikonwerkstoff und/oder einen Schaumwerkstoff, insbesondere einen geschlossenen Schauwerkstoff aufweisen. Die Dichtschicht 200 weist eine Oberseite 205 auf, die der Abdeckung 60 zugewandt ist. Die geometrische Ausbildung der Oberseite 205 ist geometrisch nicht beschränkt. Der Schlauch 95 ist zwischen der Abdeckung 60 und der Dichtschicht 200 angeordnet.

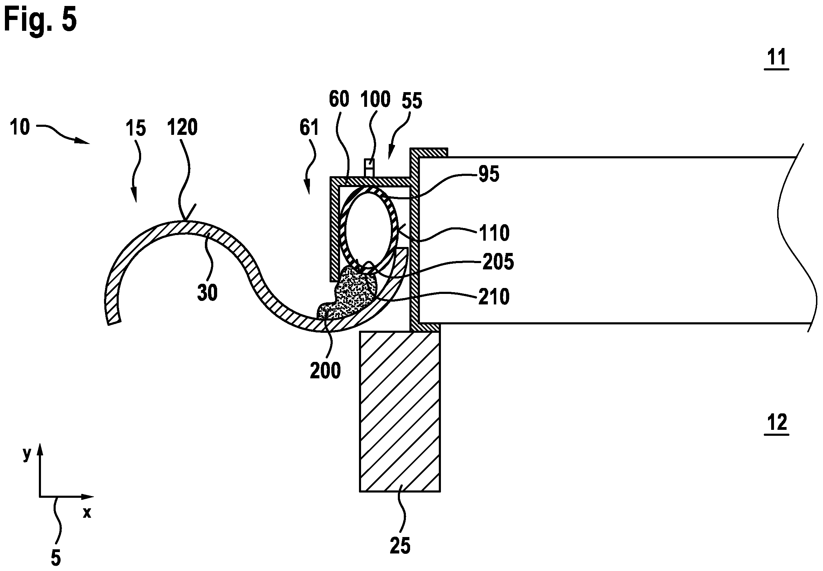

Figur 5 zeigt eine Schnittansicht durch das in Figur 4 gezeigte Bedachungssystem 10 nach einem dritten Montageschritt.

Im dritten Montageschritt wird, wie zu Figur 3 bereits erläutert, das Medium 105 in den Schlauch 95 vor dem Aushärten der Dichtschicht 200 gefüllt. Durch den Überdruck des Mediums 105 dehnt sich der Schlauch 95 in seiner räumlichen Erstreckung aus, wobei die äußere Umfangsfläche 110 des Schlauchs 95 gegen die Oberseite 205 der noch nicht ausgehärteten Dichtschicht 200 gepresst wird. Dadurch wird die Oberseite 205 an die geometrische Ausgestaltung der äußeren Umfangsfläche 110 angepasst. Ferner geht die äußere Umfangsfläche 110 zumindest abschnittsweise eine stoffschlüssige Verbindung 210 mit der Dichtschicht 200 ein. Dadurch wird zuverlässig gewährleistet, dass die Dichteinrichtung 55 sich zwischen der Abdeckung 60 und dem Bedachungselement 30 erstreckt.

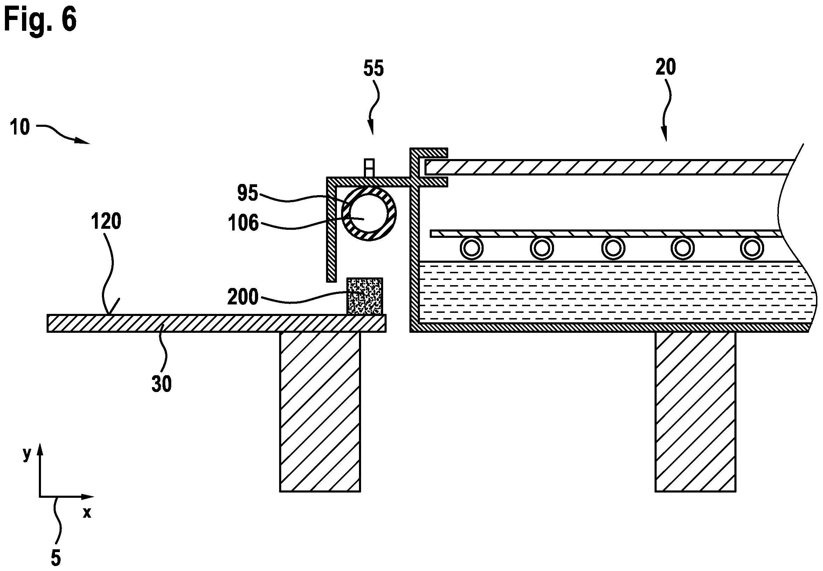

Figur 6 zeigt eine Schnittansicht durch eine zweite Ausführungsform des Bedachungssystems 10 nach dem zweiten Montageschritt. Das Bedachungssystem 10 weist in der Ausführungsform Bedachungselemente 30 auf, die im Wesentlichen plan ausgebildet sind. Gegenüber dem in Figuren 4 und 5 beschrieben Montageverfahren, wird in einem ersten Montageschritt der in Figur 5 im zweiten Montageschritt aufgebrachten Dichtschicht 200 in der Ausführungsform in dem ersten Montageschritt eine bandartig ausgebildete Dichtschicht 200 auf die Außenfläche 120 des Bedachungselements 120 angrenzend an die Aussparung 21 aufgebracht. Im zweiten Montageschritt wird dann das Dachelement 35 an dem Trägersystem 25 montiert. Die Dichtschicht 200 weist in der Ausführungsform einen im Wesentlichen rechteckförmigen Querschnitt auf, wobei die Dichtschicht 200 einen Werkstoff aufweisen kann, der selbstausdehnend ausgebildet ist, sodass über einen Zeitraum sich eine Höhe der Dichtschicht 200 vergrößern kann. Die Ausgestaltung der Dichtschicht 200 mit der bandartigen Ausgestaltung hat vor allem bei plan ausgebildeten Bedachungselementen 30 den Vorteil, dass die Dichtschicht 200 besonders schnell in der Montage aufgebracht werden kann. In der Ausführungsform ist im Wesentlichen die Dichtschicht 200 senkrecht unterhalb des Schlauchs 95 der Dichteinrichtung 55 angeordnet. Selbstverständlich ist auch denkbar, dass die Dichtschicht 200 versetzt zu dem Schlauch 95 angeordnet ist.

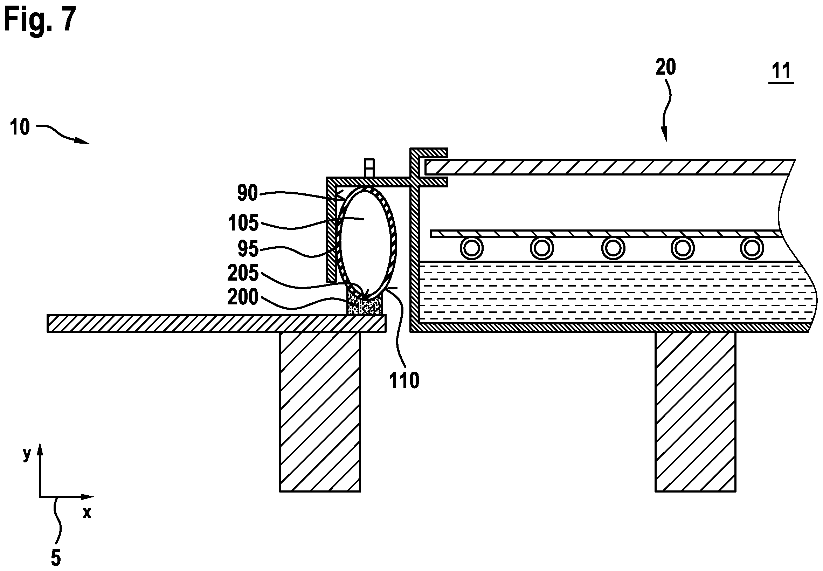

Figur 7 zeigt das in Figur 6 gezeigte Bedachungssystem 10 nach einem dritten Montageschritt. Im dritten Montageschritt wird das Medium 105 in den Innenraum 106 gefüllt. Das Medium 105 sorgt dabei dafür, dass sich der Schlauch 95 ausdehnt, und die äußere Umfangsfläche 110, wie bereits in Figur 5 erläutert, sich in die Dichtschicht 200 presst und dabei eine zur Außenfläche 11 zugewandte Oberfläche 205 verformt, sodass die äußere Umfangsfläche 110 und die Oberfläche 205 korrespondierend zueinander im Bereich der Dichtschicht 200 ausgebildet sind. Ferner liegt die äußere Umfangsfläche 110 an der Innenwand 90 an. Dadurch wird gewährleistet, dass das Bedachungssystem 10 einen Eintritt von Wasser in einen Spalt zwischen der Abdeckung 60 und dem Bedachungselement 30 verhindert.

Ferner wird darauf hingewiesen, dass die Dacheinheit 20 auch weitere Dichteinrichtungen aufweisen kann. Ferner ist denkbar, dass die Dichteinrichtung 55 umlaufend um das Gehäuse 40 und/oder nur abschnittsweise angrenzend an das Dachelement angeordnet ist.

## Patentansprüche

1. Bedachungssystem (10),
- mit einer Bedachung (15) und einer Dacheinheit (20),
- wobei die Dacheinheit (20) ein Dachelement (35) und eine Dichteinrichtung (55) umfasst,
- wobei das Dachelement (35) ein Gehäuse (40) und eine seitlich am Gehäuse (40) angeordnete Abdeckung (60) aufweist,
- wobei die Dichteinrichtung (55) angrenzend an das Dachelement (35) angeordnet ist,
- wobei zumindest teilweise unterhalb der Abdeckung (60) die Dichteinrichtung (55) angeordnet ist,
- wobei die Dichteinrichtung (55) einen flexiblen Schlauch (95) und eine Befülleinrichtung (100) aufweist,
- wobei die Befülleinrichtung (100) ausgebildet ist, ein Medium (105) in den Schlauch (95) zur Veränderung eines Querschnitts des Schlauchs (95) zu füllen,
- wobei der Schlauch (95) ausgebildet ist, einen Spalt (116) zwischen dem Dachelement (35) und der Bedachung (15) zu reduzieren,
- wobei die Dichteinrichtung (55) zu der Bedachung (15) zumindest abschnittsweise überlappend angeordnet ist,
**dadurch gekennzeichnet, dass**
- die Dichteinrichtung (55) eine Dichtschicht (200) umfasst,
- wobei die Dichtschicht (200) an der Bedachung (15) anordenbar ist,
- wobei der Schlauch (95) zwischen der Dichtschicht (200) und einer Abdeckung (60) des Dachelements (35) angeordnet ist,
- wobei das Medium (105) ausgebildet ist, den Schlauch (95) zumindest abschnittsweise in die Dichtschicht (200) zu pressen,
- wobei der Schlauch (95) eine stoffschlüssige Verbindung (210) mit der Dichtschicht (200) aufweist.

2. Bedachungssystem (10) nach Anspruch 1,
- wobei die Abdeckung (60) einen ersten Abschnitt (65) und einen mit dem ersten Abschnitt (65) verbundenen zweiten Abschnitt (70) umfasst,
- wobei der erste Abschnitt (65) im Wesentlichen parallel zu einer Oberseite (75) und/oder Unterseite (80) des Gehäuses (40) angeordnet ist,
- wobei der zweite Abschnitt (70) im Wesentlichen senkrecht zum ersten Abschnitt (65) angeordnet ist,
- wobei der erste Abschnitt (65) mit dem Gehäuse (40) verbunden ist.

3. Bedachungssystem (10) nach Anspruch 1 oder 2,
- wobei das Gehäuse (40) eine Seitenwand (85) umfasst
- wobei die Abdeckung (60) zumindest abschnittsweise eine der Seitenwand (85) zugewandte Innenwand (90) aufweist,
- wobei der Schlauch (95) zumindest teilweise zwischen der Seitenwand (85) und der Innenwand (90) angeordnet ist.

4. Dacheinheit (20) Bedachungssystem (10) nach einem der Ansprüche 1 bis 3, wobei die Dichtschicht (200) bandartig ausgebildet ist und/oder einen Schaumwerkstoff aufweist.

5. Bedachungssystem (10) nach einem der Ansprüche 1 bis 4,
- wobei die Befülleinrichtung (100) ein Ventil (101) umfasst,
- wobei das Ventil (101) mit einem Innenraum (106) des Schlauchs (95) verbunden ist,
- wobei mittels des Ventils (101) das Medium (105) in den Innenraum (106) förderbar ist.

6. Bedachungssystem (10) nach einem der Ansprüche 1 bis 5, wobei das Dachelement (35) als thermischer Solarkollektor oder als Photovoltaikmodul oder als Fenster ausgebildet ist.

7. Bedachungssystem (10) nach einem der vorhergehenden Ansprüche,
- wobei die Bedachung (15) eine Einbuchtung (61) aufweist,
- wobei der Schlauch (95) in die Einbuchtung (61) zumindest teilweise eingreift,
- wobei das Medium (105) den Schlauch (95) zwischen der Einbuchtung (61) und dem ersten und/oder zweiten Abschnitt (65, 70) verspannt.

8. Verfahren zur Montage eines Bedachungssystems (10) nach einem der vorhergehenden Ansprüche,
- wobei das Dachelement (35) derart an der Bedachung (15) befestigt wird, dass die Dichteinrichtung (55) zumindest abschnittsweise mit der Bedachung (15) überlappt,
- wobei das Medium (105) in den Schlauch (95) gefördert wird, so dass der Schlauch (95) den Spalt (116) zwischen der Bedachung (15) und dem Dachelement (35) reduziert, vorzugsweise schließt,
- wobei auf die Bedachung (15), vorzugsweise vor der Förderung des Mediums (105) in den Schlauch (95), die Dichtschicht (200) aufgebracht wird,
- wobei das Medium (105) den Schlauch (95) zumindest abschnittsweise in die Dichtschicht (200) presst,
- wobei der Schlauch (95) eine stoffschlüssige Verbindung (210) mit der Dichtschicht (200) eingeht.

## Claims

1. Roofing system (10),
- having a roofing (15) and a roof unit (20),
- wherein the roof unit (20) comprises a roof element (35) and a sealing device (55),
- wherein the roof element (35) has a housing (40) and a cover (60) arranged laterally on the housing (40),
- wherein the sealing device (55) is arranged in a manner adjoining the roof element (35),
- wherein the sealing device (55) is arranged at least in part beneath the cover (60),
- wherein the sealing device (55) has a flexible tube (95) and a filling device (100),
- wherein the filling device (100) is configured to fill a medium (105) into the tube (95) for changing a cross section of the tube (95),
- wherein the tube (95) is configured to reduce a gap (116) between the roof element (35) and the roofing (15),
- wherein the sealing device (55) is arranged so as to overlap the roofing (15) at least in certain portions,
**characterized in that**
- the sealing device (55) comprises a sealing layer (200),
- wherein the sealing layer (200) can be arranged on the roofing (15),
- wherein the tube (95) is arranged between the sealing layer (200) and a cover (60) of the roof element (35),
- wherein the medium (105) is configured to press the tube (95) at least in certain portions into the sealing layer (200),
- wherein the tube (95) has an integral connection (210) with the sealing layer (200).

2. Roofing system (10) according to Claim 1,
- wherein the cover (60) comprises a first portion (65) and a second portion (70) connected to the first portion (65),
- wherein the first portion (65) is arranged substantially parallel to a top side (75) and/or bottom side (80) of the housing (40),
- wherein the second portion (70) is arranged substantially perpendicular to the first portion (65),
- wherein the first portion (65) is connected to the housing (40).

3. Roofing system (10) according to Claim 1 or 2,
- wherein the housing (40) comprises a side wall (85),
- wherein the cover (60) has, at least in certain portions, an inner wall (90) facing toward the side wall (85),
- wherein the tube (95) is arranged at least in part between the side wall (85) and the inner wall (90).

4. Roof unit (20) roofing system (10) according to one of Claims 1 to 3, wherein the sealing layer (200) has a strip-like form and/or comprises a foam material.

5. Roofing system (10) according to one of Claims 1 to 4,
- wherein the filling device (100) comprises a valve (101),
- wherein the valve (101) is connected to an interior space (106) of the tube (95),
- wherein the medium (105) can be conveyed into the interior space (106) by means of the valve (101).

6. Roofing system (10) according to one of Claims 1 to 5, wherein the roof element (35) is in the form of a thermal solar collector or in the form of a photovoltaic module or in the form of a window.

7. Roofing system (10) according to one of the preceding claims,
- wherein the roofing (15) has an indentation (61),
- wherein the tube (95) engages at least in part into the indentation (61),
- wherein the medium (105) braces the tube (95) between the indentation (61) and the first and/or second portion (65, 70).

8. Method for assembling a roofing system (10) according to one of the preceding claims,
- wherein the roof element (35) is fixed to the roofing (15) in such a manner that the sealing device (55) overlaps with the roofing (15) at least in certain portions,
- wherein the medium (105) is conveyed into the tube (95) such that the tube (95) reduces, preferably closes, the gap (116) between the roofing (15) and the roof element (35),
- wherein the sealing layer (200) is applied to the roofing (15), preferably before the medium (105) is conveyed into the tube (95),
- wherein the medium (105) presses the tube (95) at least in certain portions into the sealing layer (200),
- wherein the tube (95) enters into an integral connection (210) with the sealing layer (200).

## Revendications

1. Système de toiture (10),
- comprenant une toiture (15) et une unité de toit (20),
- l'unité de toit (20) comprenant un élément de toit (35) et un dispositif d'étanchéité (55),
- l'élément de toit (35) présentant un boîtier (40) et un recouvrement (60) disposé latéralement sur le boîtier (40),
- le dispositif d'étanchéité (55) étant disposé en position adjacente à l'élément de toit (35),
- le dispositif d'étanchéité (55) étant disposé au moins en partie en dessous du recouvrement (60),
- le dispositif d'étanchéité (55) présentant un tuyau flexible (95) et un dispositif de remplissage (100),
- le dispositif de remplissage (100) étant réalisé de manière à remplir le tuyau (95) avec un milieu (105) pour modifier une section transversale du tuyau (95),
- le tuyau (95) étant réalisé de manière à réduire un interstice (116) entre l'élément de toit (35) et la toiture (15),
- le dispositif d'étanchéité (55) étant disposé de manière à chevaucher au moins en partie la toiture (15),
**caractérisé en ce que**
- le dispositif d'étanchéité (55) comprend une couche d'étanchéité (200),
- la couche d'étanchéité (200) pouvant être disposée sur la toiture (15),
- le tuyau (95) étant disposé entre la couche d'étanchéité (200) et un recouvrement (60) de l'élément de toit (35),
- le milieu (105) étant réalisé de manière à presser au moins en partie le tuyau (95) dans la couche d'étanchéité (200),
- le tuyau (95) présentant un engagement par liaison de matière (210) avec la couche d'étanchéité (200).

2. Système de toiture (10) selon la revendication 1,
- le recouvrement (60) présentant une première portion (65) et une deuxième portion (70) connectée à la première portion (65),
- la première portion (65) étant disposée essentiellement parallèlement à un côté supérieur (75) et/ou un côté inférieur (80) du boîtier (40),
- la deuxième portion (70) étant disposée essentiellement perpendiculairement à la première portion (65),
- la première portion (65) étant connectée au boîtier (40). '

3. Système de toiture (10) selon la revendication 1 ou 2,
- le boîtier (40) comprenant une paroi latérale (85),
- le recouvrement (60) présentant au moins en partie une paroi intérieure (90) tournée vers la paroi latérale (85),
- le tuyau (95) étant disposé au moins en partie entre la paroi latérale (85) et la paroi intérieure (90).

4. Unité de toit (20) système de toiture (10) selon l'une quelconque des revendications 1 à 3, la couche d'étanchéité (200) étant réalisée sous forme de bande et/ou présentant un matériau en mousse.

5. Système de toiture (10) selon l'une quelconque des revendications 1 à 4,
- le dispositif de remplissage (100) comprenant une valve (101),
- la valve (101) étant connectée à l'espace intérieur (106) du tuyau (95),
- le milieu (105) pouvant être refoulé à l'intérieur de l'espace intérieur (106) au moyen de la soupape (101).

6. Système de toiture (10) selon l'une quelconque des revendications 1 à 5, l'élément de toit (35) étant réalisé sous forme de collecteur solaire thermique ou sous forme de module photovoltaïque ou sous forme de fenêtre.

7. Système de toiture (10) selon l'une quelconque des revendications précédentes,
- la toiture (15) présentant un renfoncement (61),
- le tuyau (95) s'engageant au moins en partie dans le renfoncement (61),
- le milieu (105) sollicitant le tuyau (95) entre le renfoncement (61) et la première et/ou la deuxième portion (65, 70).

8. Procédé de montage d'un système de toiture (10) selon l'une quelconque des revendications précédentes,
- l'élément de toit (35) étant fixé à la toiture (15) de telle sorte que le dispositif d'étanchéité (55) chevauche au moins en partie la toiture (15),
- le milieu (105) étant refoulé dans le tuyau (95) de telle sorte que le tuyau (95) réduise, de préférence ferme, l'interstice (116) entre la toiture (15) et l'élément de toit (35),
- la couche d'étanchéité (200) étant appliquée sur la toiture (15), de préférence avant le refoulement du milieu (105) dans le tuyau (95),
- le milieu (105) pressant au moins en partie le tuyau (95) dans la couche d'étanchéité (200),
- le tuyau (95) s'engageant par liaison de matière (210) avec la couche d'étanchéité (200).
